# EUROPEAN PATENT APPLICATION

(11) **EP 4 598 001 A1**
(43) Date of publication of application: **06.08.2025**
(21) Application number: 25151393.3
(22) Date of filing: 13.01.2025
(51) Int. Cl.: H04N 1/00, G06F 1/32

(54) **COMMUNICATION METHOD, CONTROL APPARATUS, ELECTRONIC DEVICE AND STORAGE MEDIUM**

(30) Priority: 05.02.2024 CN 202410166995; 21.03.2024 CN 202410331377
(71) Applicant: Zhuhai Pantum Electronics Co., Ltd., Zhuhai, Guangdong (CN)
(72) Inventor: LIU, Xingjin, Zhuhai (CN); YU, Chengzhu, Zhuhai (CN); LIAN, Wei, Zhuhai (CN); ZHANG, Fei, Zhuhai (CN); TIAN, Ye, Zhuhai (CN); LI, Xin, Zhuhai (CN); DING, Yuguan, Zhuhai (CN)
(74) Representative: Sun, Yiming

(57) **Abstract**

Embodiments of the present disclosure provide a communication method, a control apparatus, an electronic device, and a storage medium. The method includes: when an electronic device is in a low power consumption mode, in response to a target service request message, sending target data to a target device to allow the target device to establish a communication connection with the electronic device according to the target data, where the target device is a device that sends the target service request message. The present disclosure is capable of achieving the purpose of establishing a communication connection with the target device through a target service while meeting the low power consumption requirements of the electronic device.

## Description

### TECHNICAL FIELD

The present application relates to the field of image forming technology, and in particular to a communication method, a control apparatus, an electronic device and a storage medium.

### BACKGROUND

In order to adapt to the increasingly high energy consumption requirements and improve product competitiveness, existing image forming devices are all equipped with low power consumption modes. In low power consumption mode, some functional modules in an image forming device are dormant, resulting in the inability of the image forming device to implement certain functions. For example, when an image forming device is in the low power consumption mode, it cannot communicate with other devices through the Bonjour service because it cannot reply to Bonjour data, which in turn causes some other devices to be unable to use the image forming device when the image forming device is in the low power consumption mode, reducing the user experience.

### SUMMARY

In view of the above, the present disclosure provides a communication method, a control apparatus, an electronic device and a storage medium, so as to solve the problems in the existing technologies that an image forming device cannot be used due to the inability to communicate with the image forming device in the low power consumption mode.

In a first aspect, an embodiment of the present disclosure provides a communication method, which is applied to an electronic device and includes:
when the electronic device is in a low power consumption mode, in response to a target service request message, sending target data to a target device to allow the target device to establish a communication connection with the electronic device according to the target data, where the target device is a device that sends the target service request message.

In some embodiments of the first aspect, the electronic device is configured to store the target data in a first storage area when in a non-low power consumption mode, and before sending the target data to the target device, the method further includes: acquiring the target data from a first storage area, where the first storage area is a storage area that is readable when the electronic device is in the low power consumption mode.

In some embodiments of the first aspect, the electronic device is configured to store the target data in a first storage area when in a non-low power consumption mode, and before sending the target data to the target device, the method further includes: storing the target data, stored in the first storage area, in a second storage area, and acquiring the target data from the second storage area, where the second storage area is a storage area that is readable when the electronic device is in the low power consumption mode.

In some embodiments of the first aspect, sending the target data to the target device in response to the target service request message includes: obtaining a service request message; determining whether the service request message is a target service request message; and when the service request message is the target service request message, sending the target data to the target device in response to the target service request message.

In some embodiments of the first aspect, where the electronic device is configured to establish the communication connection with the target device through a target service, and sending the target data to the target device includes: encapsulating according to a data format of the target service to obtain target data in the target format; and network-encapsulating the target data in the target format, and sending the network-encapsulated target data to the target device.

In some embodiments of the first aspect, the method further includes: before entering the low power consumption mode, storing the target data in the first storage area.

In some embodiments of the first aspect, where before entering the low power consumption mode, storing the target data in the first storage area includes: before entering the low power consumption mode, storing the target data in the first storage area when network identification information of the electronic device changes; or storing the target data in the first storage area when the electronic device is restarted; or storing the target data in the first storage area when or after the electronic device determines that it needs to enter the low power consumption mode; or storing the target data in the first storage area when the electronic device determines that it needs to perform system initialization required for entering the low power consumption mode; or storing the target data in the first storage area when the electronic device is in a process of executing the system initialization required for entering the low power consumption mode.

In a second aspect, an embodiment of the present disclosure provides a control apparatus ,comprising: a memory for storing computer program instructions and a processor for executing the program instructions, wherein when the computer program instructions are executed by the processor, the control apparatus is configured to: send target data to a target device in response to a target service request message when an electronic device is in a low power consumption mode, to allow the target device to establish a communication connection with the electronic device according to the target data, wherein the target device is a device that sends the target service request message.

In some embodiments of the second aspect, the control apparatus includes a control unit, and when the electronic device is in a low power consumption mode, the control unit is at least partially in a working state.

In some embodiments of the second aspect, the control unit includes a first control unit, and when the electronic device is in the low power consumption mode, the first control unit is in the working state, and the first control unit is specifically configured to send the target data to the target device in response to the target service request message when the electronic device is in the low power consumption mode, to allow the target device to establish a communication connection with the electronic device based on the target data, where the target device is the device that sends the target service request message.

In some embodiments of the second aspect, the electronic device is configured to store the target data in a first storage area when the electronic device is in a non-low power consumption mode, and the first control unit is specifically configured to obtain the target data from the first storage area before sending the target data to the target device, where the first storage area is a storage area that is readable by the first control unit when the electronic device is in the low power consumption mode.

In some embodiments of the second aspect, the electronic device is configured to store the target data in a first storage area when it is in a non-low power consumption mode, and the electronic device is specifically configured to store the target data, stored in the first storage area, in a second storage area before sending the target data to the target device, and the first control unit is specifically configured to obtain the target data from the second storage area, where the second storage area is a storage area readable by the first control unit when the electronic device is in the low power consumption mode.

In some embodiments of the second aspect, the electronic device is configured to store the target data in a first storage area when it is in a non-low power consumption mode, and the first control unit is specifically configured to store the target data, stored in the first storage area, in a second storage area before sending the target data to the target device, and obtain the target data from the second storage area, where the second storage area is a storage area readable by the first control unit when the electronic device is in the low power consumption mode.

In a third aspect, an embodiment of the present disclosure provides an electronic device, including the control apparatus described in the second aspect.

In a fourth aspect, an embodiment of the present disclosure provides an electronic device, including a memory for storing computer program instructions and a processor for executing the program instructions, where, when the computer program instructions are executed by the processor, the electronic device is configured to execute any one of the methods described above in the first aspect.

In a fifth aspect, an embodiment of the present disclosure provides a computer-readable storage medium, where the computer-readable storage medium includes a stored program, where, when the program is executed, the device where the computer-readable storage medium is located is controlled to execute any method described in the first aspect.

By adopting the solutions provided in the embodiments of the present disclosure, when an electronic device is in a low power consumption mode, the electronic device may also respond to a target service request message to allow a target device to establish a communication connection with the electronic device through the target service, thereby achieving the purpose of establishing a communication connection with the target device through the target service while meeting the low power consumption requirements of the electronic device.

### BRIEF DESCRIPTION OF THE DRAWINGS

In order to more clearly illustrate the technical solutions of the embodiments of the present disclosure, the drawings essential for use in the embodiments will be briefly introduced below. Apparently, the drawings described below are only some embodiments of the present disclosure. For a person skilled in the art, other drawings may be obtained based on these drawings without taking creative efforts.
FIG. 1 is a schematic structural diagram of a communication system in accordance with an embodiment of the present disclosure;
FIG. 2 is a flow chart of a communication method in accordance with an embodiment of the present disclosure;
FIG. 3 is a flow chart of another communication method in accordance with an embodiment of the present disclosure;
FIG. 4 is a flow chart of another communication method in accordance with an embodiment of the present disclosure;
FIG. 5 is a flow chart of another communication method in accordance with an embodiment of the present disclosure;
FIG. 6 is a flow chart of another communication method in accordance with an embodiment of the present disclosure;
FIG. 7 is a schematic structural diagram of an electronic device in accordance with an embodiment of the present disclosure;
FIG. 8 is a schematic structural diagram of another electronic device in accordance with an embodiment of the present disclosure;
FIG. 9 is a schematic structural diagram of another electronic device in accordance with an embodiment of the present disclosure; and
FIG. 10 is a schematic structural diagram of another electronic device in accordance with an embodiment of the present disclosure.

### DETAILED DESCRIPTION

In order to better understand the technical solutions of the present disclosure, the embodiments of the present disclosure are described in detail hereinafter with reference to the accompanying drawings.

It should be noted that the described embodiments are only part of the embodiments of the present disclosure, rather than all the embodiments. Based on the embodiments in the present disclosure, all other embodiments obtained by a person skilled in the art without creative work are within the scope of protection of the present disclosure.

The terms used in the embodiments of the present disclosure are only for the purpose of describing specific embodiments, and are not intended to limit the present disclosure. The singular forms "a", "the" and "said" used in the embodiments of the present disclosure and the appended claims are also intended to include plural forms, unless the context clearly indicates other meanings.

It should be understood that the term "and/or" used in this article is only a description of the association relationship of associated objects, indicating that there may be three relationships. For example, A and/or B may represent: A exists alone, A and B exist at the same time, and B exists alone. In addition, the character "/" in the disclosure generally indicates that the associated objects before and after are in an "or" relationship.

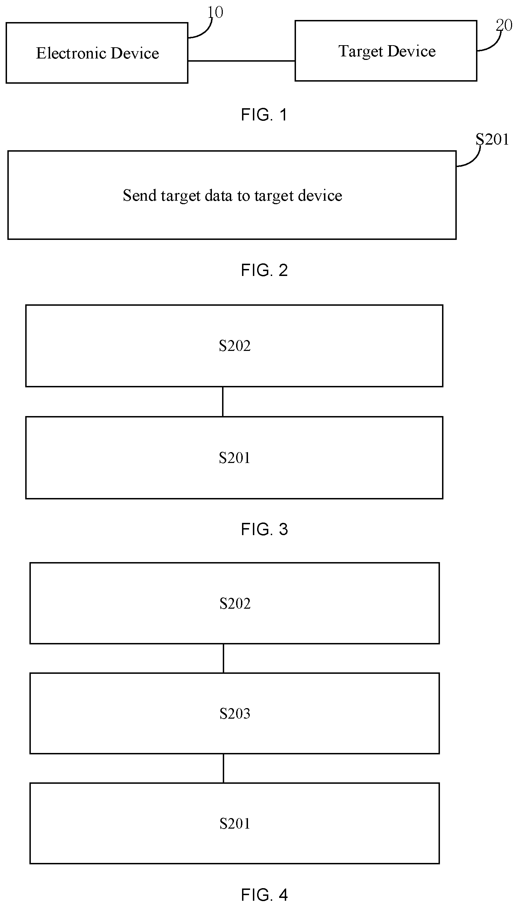

Referring to FIG. 1, a schematic structural diagram of a communication system provided by an embodiment of the present disclosure is shown. As shown in FIG. 1, the communication system includes an electronic device 10 and a target device 20. When the electronic device 10 establishes a communication connection with the target device 20, it may be achieved through some services. For example, when the target device 20 needs to establish a communication connection with the electronic device 10, it may be achieved through the Bonjour service. The Bonjour service here is a name given based on the open zero-setting network standard of the multicast domain name service, which may automatically discover computers, devices and services on the IP network. Bonjour uses the industrial standard IP protocol to allow devices to automatically discover each other without entering an IP address or configuring a DNS server. That is, the target device 20 may send a Bonjour service request message through the Bonjour service, and the request message carries the identification information of the device that needs to establish a communication connection. At this moment, when the electronic device 10 receives the Bonjour service request message, it may obtain the response data of the Bonjour service and send the response data to the target device 20, and the target device 20 may establish a communication connection with the electronic device 10 according to the response data. In some technologies, in order to meet the demand for low power consumption of the electronic device 10, a low power consumption mode is usually set in the electronic device 10. In the low power consumption mode of the electronic device 10, some functional modules in the electronic device 10 need to enter a dormant state, which may cause some functions of the electronic device 10 to be unable to be realized in the low power consumption mode. In some technologies, when the electronic device 10 is in the low power consumption mode, since the processing module of the Bonjour service needs to switch to a dormant state, the electronic device 10 cannot respond to the Bonjour service when it is in the low power consumption mode, thereby making it impossible for the target device 20 to establish a communication connection with the electronic device 10, reducing the user experience. Apparently, in the embodiments of the present disclosure, the Bonjour service may also be replaced by other services with similar functions as the Bonjour service, which is not limited in the embodiments of the present disclosure.

The electronic device 10 may be an image forming device, including but not limited to a printer, a copier, a fax machine, a scanner, and a multifunctional peripheral that performs the above functions in a single device. The target device 20 includes but is not limited to a mobile phone, a laptop, a personal digital assistant (PDA), a smart watch, a netbook, etc.

In view of the above problems, one embodiment of the present disclosure provides a communication method, in which the electronic device 10 may obtain the response data corresponding to the target service request message, i.e., the target data. After receiving the target service request message in the low power consumption mode, the electronic device 10 sends the target data to the target device 20, so that the target device 20 may establish a communication connection with the electronic device 10 through the target data. That is, the electronic device 10 may obtain the target data in advance when it is not in the low power consumption mode, so that when the electronic device 10 is in the low power consumption mode, it may also respond to the target service request message, so that the target device 20 may establish a communication connection with the electronic device 10 through the target service, thereby achieving the purpose of meeting the low power consumption requirement of the electronic device 10 and establishing a communication connection with the target device 20 through the target service. The following is a detailed description.

FIG. 2 is a flow chart of a communication method in accordance with an embodiment of the present disclosure. The method is applied to an electronic device 10 as shown in FIG. 1, and the method includes:
Step S201: When an electronic device 10 is in a low power consumption mode, in response to a target service request message, sending target data to the target device 20, so that the target device 20 may establish a communication connection with the electronic device 10 according to the target data.

The target device 20 is a device that sends the target service request message.

In the embodiments of the present disclosure, when the target device 20 needs to establish a communication connection with the electronic device 10, it may be realized through the target service. At this moment, the target device 20 may send a target service request message to the electronic device 10. In order to establish a communication connection with other devices through the target service in the low power consumption mode, the electronic device 10 may pre-obtain the target data in the non-low power consumption mode. In this way, in the low power consumption mode, when the electronic device 10 receives the target service request message, it means that the target device 20 wants to establish a communication connection with the electronic device 10 through the target service. At this moment, the electronic device 10 may respond to the target service request message and send the target data to the target device 20, so that after receiving the target data, the target device 20 may establish a communication connection with the electronic device 10 according to the target data.

In some embodiments, as shown in FIG. 3, the method further includes:
Step S202: Before entering the low power consumption mode, storing the target data in a first storage area.

In the embodiments of the present disclosure, the electronic device 10 needs to obtain the target data before entering the low power consumption mode, so that the target data may be sent to the target device 20 when the target service request message is received in the low power consumption mode. In some embodiments, to obtain the target data, real-time network parameters from the network module of the electronic device 10 may be obtained when the network identification information of the electronic device 10 changes, and the target data is generated according to the target format of the target data and the real-time network parameters. Here, the network module refers to the component in the software module independent of the hardware module and the firmware module in the electronic device 10, which provides network services for the electronic device 10. Since the electronic device 10 may not use the target data immediately after obtaining it, the electronic device 10 needs to store the target data first. Based on this, in the embodiments of the present disclosure, the electronic device 10 is configured to store the target data in a first storage area when it is in a non-low power consumption mode, so that the electronic device 10 may obtain the target data by directly or indirectly accessing the first storage area in the low power consumption mode, so that the electronic device 10 may establish a connection with the target device based on the obtained target data.

In other words, in order to be able to respond to the target service request message in the low power consumption mode, the electronic device 10 may obtain the target data when it is not in the low power consumption mode. At this moment, when the electronic device 10 is in the non-low power consumption mode, the electronic device 10 may first obtain data corresponding to the target service as the target data. After the electronic device 10 obtains the target data, since the target data is not used immediately, it may be stored in the storage area first. In order to be able to obtain the target data in the storage area when the electronic device 10 is in the low power consumption mode, the storage area that may be read by the electronic device 10 in the low power consumption mode may be used as the first storage area, and the target data may be directly stored in the first storage area.

In some embodiments, the electronic device 10 may directly store the data corresponding to the target service as the target data in the first storage area. Alternatively, in order to reduce the occupied storage space, partial data may be extracted from target service data as the target data. In some embodiments, only data related to the target service in the target service data may be used as the target data. For example, the target service data includes the IP address information, name information, functional attribute information of the electronic device 10, and the service name of the electronic device 10 in the target service, etc. At this moment, since the IP address information and name information of the electronic device 10 will also be used when the electronic device 10 implements other functions, only the functional attribute information of the electronic device 10 and the service name of the electronic device 10 in the target service are related to the target service. At this moment, the functional attribute information of the electronic device 10 and the service name of the electronic device 10 in the target service may be used as the target data and stored in the first storage area.

In some embodiments, before entering the low power consumption mode, storing the target data in the first storage area includes:
Before entering the low power consumption mode, when the network identification information of the electronic device 10 changes, the target data corresponding to the target service is stored in the first storage area. Alternatively, when the electronic device 10 is restarted, the target data is stored in the first storage area. Alternatively, at the same time or after the electronic device 10 determines that it needs to enter the low power consumption mode, the target data is stored in the first storage area. Alternatively, when the electronic device 10 determines that it needs to perform the system initialization required for entering the low power consumption mode, the target data is stored in the first storage area. Alternatively, when the electronic device 10 is performing the system initialization required for entering the low power consumption mode, the target data is stored in the first storage area.

That is, in order to reduce the power consumption of the electronic device 10, the target data may be re-obtained only when the target data changes, and the re-obtained target data is stored in the first storage area. The target data is generated based on the identification information of the electronic device 10. Generally, the network identification information in the electronic device 10 may change due to the implementation of certain functions or a user's settings. For example, the user sets the IP address and other information of the electronic device, resulting in a change in the network identification information. Therefore, the electronic device 10 may determine whether the target data has changed by directly identifying whether the network identification information in the electronic device 10 has changed. If the network identification information has changed, it is necessary to re-obtain the target data and store the target data in the first storage area. Or when the electronic device 10 is restarted, the electronic device 10 may re-obtain the target data and store the target data in the first storage area.

In some embodiments, the electronic device 10 may detect in real-time or periodically whether the network identification information of the electronic device 10 has changed. For example, the electronic device 10 may periodically obtain the network identification information of the electronic device 10, compare the network identification information of the electronic device 10 obtained at the current time with the network identification information of the electronic device 10 obtained at the last time, and determine whether they are the same. If they are the same, it means that the network identification information of the electronic device 10 has not changed. If they are different, it means that the network identification information of the electronic device 10 has changed. At this moment, the electronic device 10 needs to re-obtain the target data from the network module 1021, and re-store the target data to the first storage area to update the target data in the first storage area.

Alternatively, in some embodiments, when the electronic device 10 is restarted, the data stored in the first storage area may be released, or the restart of the electronic device 10 may also cause the network identification information of the electronic device 10 to change. In this case, the electronic device 10 needs to re-obtain the target data after the electronic device 10 is started and store the target data in the first storage area.

Alternatively, in order to obtain the target data when the electronic device 10 is in the low power consumption mode so as to respond to the target service request message, the electronic device 10 stores the target data in the first storage area. Therefore, the electronic device 10 may store the target data in the first storage area before entering the low power consumption mode when the network identification information of the electronic device 10 changes. Alternatively, when the electronic device 10 is restarted, the target data is stored in the first storage area. Alternatively, at the same time or after the electronic device 10 determines that it needs to enter the low power consumption mode, the target data is stored in the first storage area. Alternatively, when the electronic device 10 determines that it needs to enter the system initialization required for the low power consumption mode, the target data is stored in the first storage area. Alternatively, when the electronic device 10 is in the process of executing the system initialization required for entering the low power consumption mode, the target data is stored in the first storage area. In this way, the utilization rate of the first storage area when the electronic device 10 is in a non-low power consumption mode may be improved.

In some embodiments, since not all storage areas in the electronic device 10 are in a readable and writable state in the low power consumption mode. That is, when the electronic device 10 is in the low power consumption mode, only some storage areas are readable and writable. The electronic device 10 may be configured to store the acquired target data in the first storage area first. The first storage area may be a storage area that may be read by the electronic device 10 in the low power consumption mode. At this moment, before the above step S201, as shown in FIG. 4, the method further includes:
Step S203: Acquiring target data from the first storage area.

In the embodiments of the present disclosure, after the electronic device 10 stores the target data in the first storage area in the non-low power consumption mode, the electronic device 10 may read the target data in the first storage area when it needs to obtain the target data. In some embodiments, when the electronic device 10 receives the target service request message in the low power consumption mode, the electronic device 10 may read the target data from the first storage area because it needs to respond to the target service request message.

Alternatively, in some embodiments, for ease of use, the electronic device 10 may also read the target data from the first storage when it is not switched to the low power consumption mode, so that when it enters the low power consumption mode, when it receives a target service request message, it may directly send the acquired target data as response data to the target device 20.

In other words, in the embodiments of the present disclosure, the electronic device 10 may obtain the target data in the low power consumption mode, and may also obtain the target data when not switching to the low power consumption mode, as long as the target data is obtained before sending the target data to the target device. The embodiments of the present disclosure do not limit the timing of the electronic device 10 obtaining the target data.

In some embodiments, the electronic device 10 may be configured to store the acquired target data in the first storage area. The first storage area may be a storage area that may be read by the electronic device 10 in the low power consumption mode.

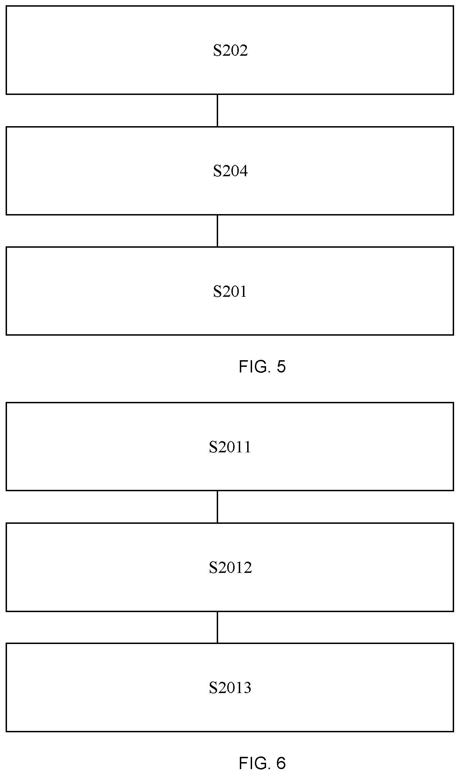

At this moment, before the above step S201, as shown in FIG. 5, the method further includes:
Step S204: Storing the target data, stored in the first storage area, in a second storage area, and obtaining the target data from the second storage area.

Here, the second storage area is a storage area that may be read when the electronic device 10 is in the low power consumption mode. That is, when the first storage area where the electronic device 10 stores the target data is not an area where the electronic device 10 can read data in the low power consumption mode, it means that the electronic device 10 cannot directly obtain the target data in the first storage area in the low power consumption mode. At this moment, the electronic device 10 needs to first store the target data, stored in the first storage area, in the second storage area that may be read in the low power consumption mode. That is, the electronic device 10 may read the target data stored in the first storage area and store it in the second storage area.

After storing the target data in the second storage area, the electronic device 10 may read the target data from the second storage area when it needs to obtain the target data. In some embodiments, the electronic device 10 may be in the low power consumption mode, and when receiving a target service request message, since it needs to respond to the target service request message, the electronic device 10 may first read the target data from the second storage area.

The aforementioned embodiment states that the first storage area is not an area where the electronic device 10 can read in the low power consumption mode, and the target data stored in the first storage area must be stored in the second storage area before the target data is sent to the target device. It should be noted that in some embodiments, the first storage area may also be an area where the electronic device 10 can read in the low power consumption mode. Before the target data is sent to the target device, the electronic device 10 stores the target data, stored in the first storage area, in the second storage area, so that the target data may be obtained from the second storage area when the electronic device 10 is in the low power consumption mode.

In some embodiments, as shown in FIG. 6, the above step S201 for sending the target data to the target device in response to the target service request message includes:
Step S2011: Obtaining a service request message.
Step S2012: Determining whether the service request message is a target service request message.
Step S2013: If the service request message is a target service request message, in response to the target service request message, sending the target data to the target device 20.

That is, since other devices may usually send service request messages by broadcasting, the service request message received by the electronic device 10 may not be a request message for establishing a communication connection with the electronic device 10, but for realizing other functions. In view of this, when the electronic device 10 receives a service request message, it is necessary to first determine whether the service request message is a target service request message for establishing a communication connection with the electronic device 10. When it is determined that the received service request message is a target service request message, the electronic device 10 determines that it needs to respond to the target service request message. At this time, the electronic device 10 may send the target data as a response message to the target device 20.

In some embodiments, a service request message generally includes service information, which is used to indicate the service requested by the service request. When the service information indicates that the service request message is used to establish a communication connection with the electronic device 10, the electronic device 10 may determine that the received service request message is a target service request message.

In some embodiments, the service information includes: at least one of service name information and service device identification information.

That is, when the service information includes the name information of the service, it means that the service request message contains the name of the service requested by the target device. At this moment, the electronic device 10 may determine whether the service requested by the target device 20 is a service that the electronic device 10 may provide according to the name information of the service in the service request message. When the name information of the service in the service request message matches a service that the electronic device 10 can provide, it may be determined that the service request message is a target service request message. At this moment, the electronic device 10 needs to respond to the target service request message, and the electronic device 10 may send the target data as a response message to the target device 20. Alternatively, when the name information of the service in the service request message does not match a service that the electronic device 10 can provide, it means that the service request message is not a target service request message, and the electronic device 10 does not need to respond to it.

Alternatively, when the service information includes the device identification information of the service, the electronic device 10 may determine whether the service request message is a target service request message according to the device identification information of the service in the service request message. In some embodiments, the electronic device 10 may determine whether the service message is a target service request message by detecting whether the device identification information of the service in the service request message is the identification information of the electronic device 10. If the device identification information of the service in the service request message is the identification information of the electronic device 10, the electronic device 10 determines that the received service request message is a target service request message, and the electronic device 10 needs to respond to the service request message. At this moment, the electronic device 10 may send the target data as a response message to the target device 20. Otherwise, the electronic device 10 determines that the received service request message is not a target service request message, and the electronic device 10 does not need to respond to it.

In some embodiments, the device identification information of the service may include at least one of the name information of the device and the service name information of the device. That is, the device identification information of the service may be the name information of the device, or the service name information registered by the device in the target service, or other information of the device that may uniquely identify the device, which is not limited in this disclosure.

When the device identification information of the service includes the name information of the device, the electronic device 10 may detect whether the name information of the device contained in the service request message is the name information of the electronic device 10 when receiving the service request message. If the name information of the device contained in the service request message is the name information of the electronic device 10, it is determined that the received service request message is a target service request message. At this moment, the electronic device 10 needs to respond to the target service request message, and the electronic device 10 may send the target data to the target device 20.

Alternatively, when the device name information included in the service request message is not the name information of the electronic device 10, the electronic device 10 may determine that the received service request message is not a target service request message, and the electronic device 10 does not respond to the service request message.

When the device identification information of the service includes the service name information of the device, the electronic device 10 may detect whether the service name information of the device contained in the service request message is the service name information registered in the target service by the electronic device 10 when receiving the service request message. If the service name information of the device contained in the service request message is the service name information of the electronic device 10, it is determined that the received service request message is a target service request message. At this moment, the electronic device 10 needs to respond to the target service request message, and the electronic device 10 may send the target data to the target device 20.

Alternatively, when the service name information of the device included in the service request message is not the service name information of the electronic device 10, it is determined that the received service request message is not a target service request message, and the electronic device 10 does not respond to the service request message. In some embodiments, when the electronic device 10 is an image forming device, the service name information includes at least one of a printer service, a scanning service, and a fax service. At this moment, when the electronic device 10 receives the service request message, it may detect the service name information included in the service request message. If the service name information includes at least one of a printer service, a scanning service, and a fax service, it means that the received service request message is a target service request message for establishing a communication connection with the image forming device, and the electronic device 10 may send the target data to the target device 20.

Apparently, the electronic device may also comprehensively determine whether the aforementioned service request message is a target service request message based on the device identification of the service and the name information of the service, which is not limited in the embodiments of the present disclosure.

In some embodiments, the electronic device 10 is configured to establish a communication connection with the target device 20 through the target service. At this moment, the sending of the target data to the target device 20 includes:
The target data in the target format are encapsulated according to the data format of the target service to obtain the target data in the target format; the target data in the target format are network-encapsulated, and the network-encapsulated target data are sent to the target device 20.

That is, the target service has its own data format. When the electronic device 10 sends the target data to other devices, it needs to encapsulate the target data according to the data format of the target service, so that when the other devices receive the target data, they may parse the target data according to the data format of the target service and obtain the relevant data of the electronic device 10 they need. Based on this, when the electronic device 10 sends the target data to the target device 20, it needs to first encapsulate it into data in the data format of the target service. At this moment, after the electronic device 10 obtains the target data, it may first encapsulate the target data according to the data format of the target service to obtain the target data in the target format. In some embodiments, when the target data is only part of the target service data, when the target data is encapsulated according to the data format of the target service, the electronic device 10 also needs to supplement the content that is not in the target data according to the data format of the target service. For example, the data format of the target service contains IP address information, name information, function attribute information of the electronic device 10 and service name information of the electronic device 10. At this moment, when the target data only includes the functional attribute information of the electronic device 10 and the service name information of the electronic device 10, when the target data is packaged according to the data format of the target service, the electronic device 10 needs to first obtain the IP address information and name information of the electronic device 10. The IP address information, name information, functional attribute information of the electronic device 10, and service name information of the electronic device 10 are packaged according to the data format of the target service. After the package of the target data is completed, the target data in the target format may be obtained. In order to reduce the storage space used by the target data, when the electronic device 10 is in the low power consumption mode, after receiving the target service request message, when it needs to send the target data to the target device 20, the process of packaging the target data according to the data format of the target service is performed.

After obtaining the target data in the target format, when the electronic device 10 needs to send the target data to the target device 20, the electronic device 10 may transmit the target data to the target device 20 through network transmission. Therefore, in order to transmit the target data to the target device 20, the electronic device 10 needs to first perform corresponding network-encapsulation on the target data in the target format, and then transmit the network-encapsulated target data to the target device 20 through the network. At this moment, when the electronic device 10 performs network-encapsulation on the target data in the target format, it may determine the data encapsulation format according to the transmission protocol it adopts, and then encapsulate the target data in the corresponding format.

In some embodiments, the electronic device 10 may perform network transmission of the target data through Transmission Control Protocol (TCP). At this moment, the electronic device 10 may encapsulate the target data in the target format according to the data format of TCP to form a TCP data packet, and transmit the TCP data packet to the target device 20 through the network.

In some embodiments, the electronic device 10 may also transmit the target data via the network through User Datagram Protocol (UDP). At this moment, the electronic device 10 may encapsulate the target data in the target format according to the data format of UDP to form a UDP data packet, and transmit the UDP data packet to the target device 20 via the network.

Apparently, the electronic device 10 may also perform network transmission of the target data through other transmission protocols. In this case, the electronic device 10 may perform corresponding network-encapsulation of the target data according to the transmission protocol, which is not limited in the present disclosure.

In some embodiments, when the electronic device 10 needs to send the network-encapsulated target data to the target device 20, the target data may be transferred to the output interface of the electronic device 10 through Direct Memory Access (DMA), and the encapsulated target data may be sent out through the output interface.

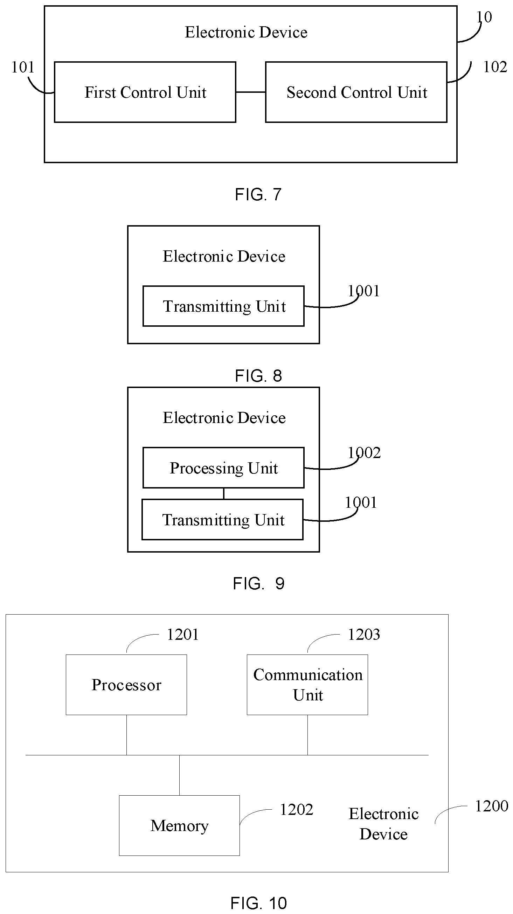

Referring to FIG. 7, a schematic structural diagram of another electronic device in accordance with an embodiment of the present disclosure is shown. Different functions of the electronic device 10 may be implemented by different chips therein. As shown in FIG. 7, the electronic device 10 includes a first control unit 101 and a second control unit 102. Here, the first control unit 101 and the second control unit 102 may be two different chips in the electronic device 10. In some embodiments, the first control unit 101 and the second control unit 102 may be microprocessor units (MCUs) to provide different combination controls for different application scenarios. Optionally, the first control unit 101 and the second control unit 102 may be integrated into the same System-on-Chip (SOC) to provide hardware support for the electronic device 10. Optionally, in some embodiments, the first control unit 101 and the second control unit 102 may also be integrated in the same MCU to provide different combination controls for different application scenarios. Apparently, in other embodiments, the first control unit and the second control unit may also include the aforementioned MCU and the corresponding peripheral single channel, which is not limited in the embodiments of the present disclosure. Here, the first control unit 101 has a relatively low power consumption, and may work normally even when the electronic device is in a low power consumption mode, without switching to a dormant state. The second control unit 102 has a relatively high power consumption, and may establish a communication connection with the target device 20 through a target service. That is, when the electronic device 10 receives a target service request message sent by the target device 20, the second control unit 102 may determine the response data when determining that the target service request message is a request to establish a communication connection with the electronic device 10, and send a response message to the target device 20 based on the response data, so that when the target device 20 receives the response message, it may establish a communication connection with the electronic device 10 based on the response message.

In some embodiments, the target service may be a Bonjour service. The Bonjour service here is a name given based on the open zero-setting network standard of the multicast domain name service, which may automatically discover computers, devices and services on the IP network. Bonjour uses the industrial standard IP protocol to allow devices to automatically discover each other without entering an IP address or configuring a DNS server. Therefore, the target device 20 may establish a communication connection with the electronic device 10 through the Bonjour service. The target device 20 sends a Bonjour service request message to the electronic device 10, and the request message may carry the service information requested by the target device 20, and the service information is used to indicate the relevant information of the service requested by the target device 20. When the second control unit 102 in the electronic device 10 receives the Bonjour service request message, when determining that the Bonjour service request message is a request to establish a communication connection with the electronic device 10, the second control unit 102 may first determine the response data of the Bonjour service, and send the response data as a response message to the target device 20. At this moment, the target device 20 may establish a communication connection with the electronic device 10 based on the received response message. Apparently, in the embodiments of the present disclosure, the Bonjour service may also be replaced by other services with the similar functions as the Bonjour service, which is not limited in the present disclosure.

In order to meet the energy consumption requirement, the electronic device 10 needs to switch to the low power consumption mode in a non-low power consumption state. However, the power consumption of the second control unit 102 is relatively large. When the electronic device 10 is in the low power consumption mode, the second control unit 102 needs to switch to the dormant state and cannot work. At this moment, if the electronic device 10 receives a Bonjour service request message, the electronic device cannot respond to the Bonjour service request message if the second control unit 102 is not awakened. When the second control unit 102 is awakened, the electronic device cannot meet the low power consumption requirement.

In some embodiments of the present disclosure, the second control unit 102 may pre-obtain the target data and store the target data in the first storage area. The first storage area is a storage area that the second control unit 102 cannot read when in the low power consumption mode, and is also a storage area that the first control unit 101 may read when in the low power consumption mode. Before the electronic device 10 sends the target data to the target device, the first control unit 101 may acquire the target data from the first storage area. When the electronic device 10 is in the low power consumption mode, the second control unit 102 switches to a dormant state. When the electronic device 10 receives the target service request message, the first control unit 101 sends the target data as a response message of the target service request message to the target device 20, so that the target device 20 may establish a communication connection with the electronic device 20 according to the target data. That is, when the electronic device is in the low power consumption mode, the first control unit 101 may obtain the target data by directly accessing the first storage area. In some embodiments, the first control unit 101 may also obtain the target data indirectly through the first storage area. Referring to the above descriptions, it can be seen that, for example, the electronic device stores the target data, stored in the first storage area, in the second storage area, and the first control unit 101 obtains the target data by accessing the second storage area. Apparently, in some embodiments of the present disclosure, the first storage area may also be an area where the second control unit 102 cannot read in the low power consumption mode, which is not limited in the present disclosure.

Accordingly, in the embodiments of the present disclosure, when the electronic device 10 is in the low power consumption mode, it may also respond to the target service request message, so that the target device 20 may establish a communication connection with the electronic device 10 through the target service, thereby achieving the purpose of meeting the low power consumption requirement of the electronic device 10 and establishing a communication connection with the target device 20 through the target service. The following is a detailed description.

FIG. 7 is a schematic structural diagram of an electronic device in accordance with an embodiment of the present disclosure. The electronic device 10 includes:
The second control unit 102, configured to obtain target data and store the target data in the first storage area.

The target data is the data required when the electronic device 10 establishes a communication connection with other devices through the target service.

The first control unit 101, configured to obtain the target data from the first storage area before the electronic device 10 sends the target data to the target device.

The second control unit 102 is further configured to switch the electronic device to a dormant state when the electronic device is in the low power consumption mode.

The first control unit 101 is further configured to send the target data to the target device 20 in response to the target service request message when the electronic device 10 is in the low power consumption mode, so that the target device 20 may establish a communication connection with the electronic device 10 according to the target data. The target device 20 is a device that sends the target service request message. In some embodiments, the target device 20 may be a PC terminal or a mobile phone terminal, in particular, a PC terminal loaded with an IOS system and a mobile phone terminal loaded with an IOS system.

In some embodiments, since the electronic device is in a low power consumption mode, the second control unit 102 needs to switch to a dormant state and cannot work normally. In order to ensure that the target service request message can be responded to when the electronic device 10 is in a low power consumption mode, the second control unit 102 or the first control unit 101 may obtain the target data in advance before sending the target data to the target device, and store the target data of the target service in the first storage area. The first storage area is a storage area that may be read and written by the second control unit 102 and the first control unit 101. Since the first control unit 101 is a chip that may work normally without switching to a dormant mode when the electronic device 10 is in a low power consumption mode. Therefore, when the electronic device 10 is in a low power consumption mode, the target service request message needs to be responded to by the first control unit 101. In this way, the first control unit 101 needs to obtain the target data first. Since the second control unit 102 cannot perform a read operation on the first storage area when the electronic device 10 is in the low power consumption mode, in order to ensure that the first control unit 101 may obtain the target data, the second control unit 102 or the first control unit 101 needs to store the target data in the first storage area before the electronic device 10 enters the low power consumption mode, so that the first control unit 101 may obtain the target data from the first storage area. In this way, when the electronic device switches to the low power consumption mode, the second control unit 102 switches from the working state to the dormant state. At this moment, if the target device 20 sends a target service request message to the electronic device 10, after the electronic device 10 receives the target service request message, the first control unit 101 responds to the target service request message. At this moment, the first control unit 101 may obtain the target data, use the target data as the response data of the target service request message, and send the target data to the target device 20, so that the target device 20 may establish a communication connection with the electronic device 10 according to the target data.

That is, when the electronic device 10 switches to the low power consumption mode, the second control unit 102 needs to switch to the dormant state. That is, in the low power consumption mode of the electronic device 10, in order to reduce power consumption, the second control unit 102 with high power consumption needs to switch to the dormant state and no longer perform data processing. However, due to the low power consumption, the first control unit 101 may perform normal data processing without switching to the dormant state when the electronic device 10 is in the low power consumption mode. At this moment, if the target device 20 needs to establish a communication connection with the electronic device 10 through the target service, a target service request message is sent to the electronic device 10. Since the electronic device 10 is in the low power consumption mode, the second control unit 102 switches to the dormant state, so the first control unit 101 needs to respond to the target service request message accordingly. Since the first control unit 101 obtains the target data in the first storage area before the electronic device 10 sends the target data to the target device, the first control unit 101 may send the obtained target data as a response message of the target service request message to the target device 20 after receiving the target service request message. When receiving the target data, the target device 20 may establish a communication connection with the electronic device 10 according to the received target data.

That is, in the embodiments of the present disclosure, when the electronic device 10 is in the low power consumption mode, if a target service request message is received, it is not necessary to wake up the second control unit 102 from the dormant state to the working state, but the first control unit 101 in the working state responds. Since the first control unit 101 has obtained the target data from the first storage area and responded to the target service request message, the first control unit 101 may send the target data as response data to the target device 20, so that the target device 20 may establish a communication connection with the electronic device 10 according to the received target data.

Since the second control unit 102 needs to switch to a dormant state when the electronic device is in a low power consumption mode, the second control unit 102 cannot send the data of the target service as response data to other electronic devices. Therefore, the second control unit 102 or the first control unit 101 stores the data of the target service in the first storage area before the electronic device 10 runs in a low power consumption mode. At this moment, the second control unit 102 or the first control unit 101 may store the data of the target service as the target data in the first storage area. Alternatively, in order to reduce the occupied storage space, part of the target service data is extracted as the target data. In some embodiments, data related to the target service in the target service data may be used as the target data. For example, the target service data includes the electronic device 10's IP address information, name information, functional attribute information of the electronic device 10, and the service name of the electronic device 10 in the target service, etc. At this moment, since the IP address information and name information of the electronic device 10 will also be used when the electronic device implements other functions, only the functional attribute information of the electronic device 10 and the service name of the electronic device 10 in the target service are related to the target service. At this moment, the functional attribute information of the electronic device 10 and the service name of the electronic device 10 in the target service may be stored in the first storage area as target data.

In some embodiments, before the electronic device 10 operates in a low power consumption mode, the second control unit 102 or the first control unit 101 may periodically acquire target data and store it in the first storage area, so that the target data stored in the first storage area may be updated in time when the target data changes.

In some embodiments, in order to reduce the power consumption of the electronic device 10, the target data may be obtained only after the electronic device 10 is started, or when the network identification information of the electronic device 10 changes, and the obtained target data is stored in the first storage area. Since the target data is generally generated based on the identification information of the electronic device 10, the network identification information in the electronic device 10, such as the IP address of the electronic device, may change due to the implementation of certain functions or user settings. Therefore, it is possible to determine whether the target data has changed by identifying whether the network identification information in the electronic device 10 has changed. Based on this, the second control unit 102 or the first control unit 101 is specifically configured to: if it is identified that the network identification information of the electronic device 10 has changed or the electronic device 10 has been restarted, obtain the real-time network parameters from the network module of the electronic device 10, and generate the target data according to the target format and real-time network parameters of the target data, and store the target data in the first storage area. Alternatively, when the electronic device 10 determines that the system initialization required to enter the low power consumption mode is required or the electronic device 10 is in the process of executing the system initialization required to enter the low power consumption mode, the real-time network parameters are obtained from the network module of the electronic device 10, and the target data is generated according to the target format and real-time network parameters of the target data, and the target data is stored in the first storage area. The network module here refers to a component of a software module in the electronic device 10 that is independent of the hardware module and the firmware module, and provides network services for the electronic device 10.

In other words, the second control unit 102 or the first control unit 101 may detect in real-time or periodically whether the network identification information of the electronic device 10 has changed. In some embodiments, the second control unit 102 or the first control unit 101 periodically obtains the network identification information of the electronic device 10, compares the network identification information of the electronic device 10 obtained at the current time with the network identification information of the electronic device 10 obtained at the last time, and determines whether they are the same. If they are the same, it means that the network identification information of the electronic device 10 has not changed, and if they are different, it means that the network identification information of the electronic device 10 has changed. At this moment, the second control unit 102 or the first control unit 101 re-obtains the target data and re-stores the target data in the first storage area to update the target data in the first storage area.

When the electronic device 10 is restarted, the data stored in the first storage area may be released. At this moment, the second control unit 102 or the first control unit 101 obtains real-time network parameters from the network module of the electronic device 10 after the electronic device 10 is started up, generates target data according to the target format of the above target data and the real-time network parameters, and stores the target data in the first storage area.

In some embodiments, the second control unit 102 is specifically configured to: before the electronic device 10 sends the target data to the target device, obtain the target data and store the target data in the first storage area.

In other words, since the second control unit 102 or the first control unit 101 stores the target data in the first storage area, the first control unit 101 may obtain the target data from the first storage area when the electronic device 10 is in a low power consumption mode, so as to respond to the target service request message. Since the target service request message is directly responded to by the second control unit 102 when the electronic device 10 is in a non-low power consumption mode, even if the target data is stored in the first storage area, the first control unit 101 will not use it. Therefore, the second control unit 102 may obtain the target data and store the target data in the first storage area before the electronic device 10 sends the target data to the target device. In this way, the utilization rate of the first storage area when the electronic device 10 is in a non-low power consumption mode may be improved.

Apparently, in some embodiments, the first control unit 101 may be specifically configured to obtain the target data and store the target data in the first storage area before the electronic device sends the target data to the target device.

In some embodiments, the second control unit 102 is specifically configured to: before the electronic device 10 sends the target data to the target device, obtain real-time network parameters from the network module of the electronic device 10, generate target data according to the target format of the target data and the real-time network parameters, and store the target data in the first storage area.

In some embodiments, after the first control unit 101 obtains the target data from the first storage area, since the first control unit 101 usually does not immediately receive the target service request message, the first control unit 101 may first store the target data in the second storage area. Based on this, the first control unit 101 is further configured to: store the target data obtained from the first storage area in the second storage area.

The second storage area is a storage area that may be read by the first control unit 101 when the electronic device is in the low power consumption mode.

In some embodiments, after the second control unit 102 obtains the target data from the first storage area, it may store the target data obtained from the first storage area in the second storage area, where the second storage area is an area where may be read by the first control unit 101 when the electronic device is in the low power consumption mode.

At this moment, when the electronic device 10 is in the low power consumption mode, in response to the target service request message, sending the target data to the target device 20 includes: when the electronic device 10 is in the low power consumption mode, in response to the target service request message, the target data is acquired from the second storage area; and the target data is sent to the target device 20.

In other words, since not all storage areas in the electronic device 10 are in a readable and writable state in the low power consumption mode. That is, when the electronic device 10 is in the low power consumption mode, only part of the storage areas are readable and writable. The first storage area is a storage area that may be read by the first control unit 101 and written by the second control unit 102. When the electronic device 10 is in the low power consumption mode, there is a possibility that the first storage area is a storage area that cannot be read and written. Therefore, the first control unit 101 may read the target data from the first storage area before the electronic device 10 sends the target data to the target device. After reading the target data, the first control unit 101 may store it first. At this moment, the first control unit 101 may store the target data in the storage area where the first control unit 101 may perform read and write operations when the electronic device 10 is in the low power consumption mode, that is, the second storage area. In other words, in order to obtain the target data when the electronic device 10 is in the low power consumption mode, the first control unit 101 may store the target data obtained from the first storage area in the second storage area.

At this moment, if the electronic device 10 receives the target service request message, the first control unit 101 may read the target data stored therein in the second storage area, and send the target data to the target device 20 as a response message.

In some embodiments, the first control unit 101 is specifically configured to: when the electronic device 10 is in a low power consumption mode, if a service request message is received, determine whether the service request message is a target service request message; if it is determined to be a target service request message, obtain the target data from the second storage area and send the target data to the target device 20.

That is, since other devices may usually send service request messages by broadcasting, the service request message received by the electronic device 10 may not be a request message for establishing a communication connection with the electronic device 10, but for realizing other functions. Based on this, when the first control unit 101 receives the service request message, it is necessary to first determine whether the service request message is a target service request message for establishing a communication connection with the electronic device 10. When it is determined that the received service request message is a target service request message, the first control unit 101 determines that it needs to respond to the target service request message. At this moment, the first control unit 101 may obtain the target data from the second storage area and send the target data as a response message to the target device 20.

In some embodiments, the service request message generally includes service information, which is used to indicate the service requested by the service request. When the service information indicates that the service request message is used to establish a communication connection with the electronic device 10, the first control unit 101 may determine that the received service request message is the target service request message.

In some embodiments, the service information includes: at least one of service name information and service device identification information.

That is, when the service information includes the name information of the service, it means that the service request message contains the name of the service requested by the target device. At this moment, the first control unit 101 may determine whether the service requested by the target device 20 is a service that the electronic device 10 may provide according to the name information of the service in the service request message. When the name information of the service in the service request message matches a service that the electronic device 10 may provide, it may be determined that the service request message is a target service request message. At this moment, the first control unit 101 needs to respond to the target service request message, the first control unit 101 obtains the target data from the second storage area, and may send the target data as a response message to the target device 20. Alternatively, if the name information of the service in the service request message does not match a service that the electronic device 10 may provide, it means that the service request message is not a target service request message, and the first control unit 101 does not need to respond to it. In some embodiments, when the first storage area is a storage area that the first control unit 101 may access when the electronic device is in a low power consumption mode, the first control unit 101 may also directly obtain the target data from the first storage area, which is not limited in the embodiments of the present disclosure.

Alternatively, when the service information includes the device identification information of the service, the first control unit 101 may determine whether the service request message is a target service request message based on the device identification information of the service in the service request message. In some embodiments, the first control unit 101 may determine whether the service message is a target service request message by detecting whether the device identification information of the service in the service request message is the identification information of the electronic device 10. If the device identification information of the service in the service request message is the identification information of the electronic device 10, the first control unit 101 determines that the received service request message is a target service request message, and the first control unit 101 needs to respond to the service request message. At this moment, the first control unit 101 may obtain the target data from the second storage area. Otherwise, the first control unit 101 determines that the received service request message is not a target service request message, and the first control unit 101 does not need to respond to it.

In some embodiments, the device identification information of the service may include at least one of the name information of the device and the service name information of the device. That is, the device identification information of the service may be the name information of the device, or the service name information registered by the device in the target service, or other information of the device that may uniquely identify the device, which is not limited in this disclosure.

When the device identification information of the service includes the name information of the device, the first control unit 101 may detect whether the name information of the device contained in the service request message is the name information of the electronic device 10 when receiving the service request message. If the name information of the device contained in the service request message is the name information of the electronic device 10, it is determined that the received service request message is a target service request message. At this moment, the first control unit 101 needs to respond to the target service request message, and the first control unit 101 may obtain the target data from the second storage area and send the target data to the target device 20.

Alternatively, if the device name information included in the service request message is not the name information of the electronic device 10, the first control unit 101 may determine that the received service request message is not the target service request message, and the first control unit 101 does not respond to the service request message.

When the device identification information of the service includes the service name information of the device, the first control unit 101 may detect whether the service name information of the device contained in the service request message is the service name information registered by the electronic device 10 in the target service when receiving the service request message. If the service name information of the device contained in the service request message is the service name information of the electronic device 10, it is determined that the received service request message is a target service request message. At this moment, the first control unit 101 needs to respond to the target service request message, and the first control unit 101 may obtain the target data from the second storage area and send the target data to the target device 20.

Alternatively, if the service name information of the device included in the service request message is not the service name information of the electronic device 10, it is determined that the received service request message is not the target service request message, and the first control unit 101 does not respond to the service request message.

In some embodiments, when the electronic device 10 is an image forming device, the service name information includes at least one of a printer service, a scanning service, and a fax service. At this moment, the first control unit 101 may detect the service name information contained in the service request message when receiving the service request message. If the service name information includes at least one of a printer service, a scanning service, and a fax service, it means that the received service request message is a target service request message for establishing a communication connection with the image forming device. At this moment, the first control unit 101 may obtain the target data from the second storage area and send the target data to the target device 20.

Apparently, the electronic device may also comprehensively determine whether the service request message is the target service request message based on the device identification of the service and the name information of the service, which is not limited in the embodiments of the present disclosure.

In some embodiments, the second control unit 102 is specifically configured to: obtain target data, encapsulate the target data according to the data format of the target service, and store the encapsulated target data in the first storage area.

Here, the target format is the data format corresponding to the target service.

The first control unit 101 is specifically configured to: when the electronic device 10 is in the low power consumption mode, if a target service request message sent by the target device 20 is received, perform network-encapsulation on the target data obtained in the second storage area, and send the network-encapsulated target data to the target device 20.

That is, the target service has its own data format. When the electronic device 10 sends the target data to other devices, it is necessary to encapsulate the target data according to the data format of the target service, so that when other devices receive the target data, they may parse the target data according to the data format of the target service and obtain the relevant data of the electronic device 10 required by these devices. Based on this, in order to reduce the computational complexity of the first control unit 101, after obtaining the target data, the second control unit 102 may first encapsulate the target data according to the data format of the target service, and then store the target data in the first storage area. In some embodiments, if the target data is only part of the data of the target service, when encapsulating the target data according to the data format of the target service, the second control unit 102 may also supplement the content that is not in the target data according to the data format of the target service. For example, the data format of the target service includes IP address information, name information, functional attribute information of the electronic device 10, and service name information of the electronic device 10. At this moment, if the target data only includes the function attribute information of the electronic device 10 and the service name information of the electronic device 10, when the target data is packaged according to the data format of the target service, the second control unit 102 needs to first obtain the IP address information and name information of the electronic device 10. The IP address information, name information, function attribute information of the electronic device 10, and service name information of the electronic device 10 are packaged according to the data format of the target service. After the package of the target data is completed, the packaged target data is stored in the first storage area. At this moment, before the electronic device 10 sends the target data to the target device, the first control unit 101 may obtain the packaged target data from the first storage area and store the obtained target data in the second storage area.

When the electronic device 10 is in the low power consumption mode, if the target service request message sent by the target device 20 is received, the first control unit 101 needs to send the target data in the target format to the target device 20. At this moment, the first control unit 101 may transmit the target data to the target device 20 through network transmission. Therefore, in order to be able to transmit the target data in the target format to the target device 20, the first control unit 101 needs to first perform corresponding network-encapsulation on the target data in the target format, and then transmit the network-encapsulated target data to the target device 20 through the network. At this moment, when the first control unit 101 performs network-encapsulation on the target data in the target format, it may determine the data encapsulation format according to the transmission protocol it adopts, and then encapsulate the target data in the target format in the corresponding format.

In some embodiments, the first control unit 101 may perform network transmission of the target data through TCP. At this moment, the first control unit 101 may encapsulate the target data in the target format according to the data format of TCP to form a TCP data packet, and transmit the TCP data packet to the target device 20 through the network.

In some embodiments, the first control unit 102 may also perform network transmission of the target data via UDP. At this moment, the first control unit 101 may encapsulate the target data in the target format according to the data format of UDP to form a UDP data packet, and transmit the UDP data packet to the target device 20 via the network.

Apparently, the first control unit 101 may also perform network transmission of the target data through other transmission protocols. At this moment, the first control unit 101 may perform corresponding network-encapsulation of the target data in the target format according to these transmission protocols, which is not limited in the embodiments of the present disclosure.

In some embodiments, when the first control unit 101 needs to send the network-encapsulated target data to the target device 20, it may transfer the target data to the output interface of the electronic device 10 through DMA, and send the encapsulated target data out through the output interface.

In some embodiments, since the target data encapsulated in the data format of the target service needs to add information, the storage space occupied by the encapsulated target data will become larger. In order to reduce the occupancy of the storage space, the second control unit 102 may not encapsulate the target data in the data format of the target service, but directly store the acquired target data in the first storage area. At this moment, when the first control unit 101 enters the low power consumption mode and needs to perform system initialization, the target data acquired from the first storage area is the target data that is not encapsulated in the data format of the target service. The first control unit 101 stores the target data acquired from the first storage area in the second storage area. When the electronic device 10 is in the low power consumption mode, if a target service request message is received and a response is required through the target data, the first control unit 101 needs to first encapsulate the target data in the data format of the target service and then send it. That is, the first control unit 101 is specifically configured to, when the electronic device 10 is in a low power consumption mode, if a target service request message sent by the target device 20 is received, encapsulate the target data obtained in the second storage area according to the data format of the target service to obtain the target data in the target format; perform network-encapsulation on the target data in the target format, and send the network-encapsulated target data to the target device 20.

In the embodiments of the present disclosure, when the electronic device 10 is in the low power consumption mode, if the first control unit 101 receives the target service request message sent by the target device 20, the first control unit 101 needs to obtain the target data from the second storage area. Since the target data is data that is not encapsulated according to the data format of the target service, in order for the target device 20 to correctly parse the target data, the first control unit 101 needs to first encapsulate the target data according to the data format of the target service to obtain the target data in the target format. Since the target data in the target format needs to be transmitted to the target device 20 via the network, the first control unit 101 also needs to perform network-encapsulation on the target data in the target format according to the network transmission protocol, and transmit the encapsulated target data to the target device 20 via the network.

In some embodiments, the target service may be a Bonjour service. In this case, the target data is the data of the Bonjour service. That is, the target data is the data that the electronic device 10 needs to send to other devices when the other devices establish a communication connection with the electronic device 10 through the Bonjour service.

In this way, in the embodiments of the present disclosure, when the electronic device 10 is in a low power consumption mode, it may also respond to the target service request message so that the target device 20 may establish a communication connection with the electronic device 10 through the target service, thereby achieving the purpose of meeting the low power consumption requirements of the electronic device 10 while also establishing a communication connection with the target device 20 through the target service.

FIG. 8 is a schematic structural diagram of another electronic device in accordance with an embodiment of the present disclosure. As shown in FIG. 8, the electronic device includes: a transmitting unit 1001, configured to send target data to a target device in response to a target service request message when the electronic device is in a low power consumption mode, to allow the target device to establish a communication connection with the electronic device according to the target data.

The target device is a device that sends a target service request message.

In some embodiments, the electronic device, as shown in FIG. 9, further includes: a processing unit 1002, configured to store target data in a first storage area when the electronic device is in a non-low power consumption mode. The first storage area is a storage area that may be read when the electronic device is in a low power consumption mode.

The processing unit 1002 is further configured to obtain target data from the first storage area when the first storage area is a storage area that may be read when the electronic device is in a low power consumption mode.

The second storage area is a storage area that may be read when the electronic device is in a low power consumption mode.

In some embodiments, the processing unit 1002 is further configured to obtain a service request message; and determine whether the service request message is a target service request message.

The transmitting unit 1001 is specifically configured to send target data to a target device in response to the target service request message if the service request message is a target service request message.

In some embodiments, the processing unit 1002 is further configured to perform encapsulation according to the data format of the target service to obtain target data in the target format; and perform network-encapsulation on the target data in the target format.

The transmitting unit 1001 is specifically configured to send the target data after network-encapsulation to the target device.

In some embodiments, the processing unit 1002 is specifically configured to store the target data in the first storage area before entering the low power consumption mode.

In some embodiments, the processing unit 1002 is specifically configured to store the target data in the first storage area if the network identification information of the electronic device changes before entering the low power consumption mode; or store the target data in the first storage area after the electronic device is restarted; or store the target data in the first storage area if the electronic device determines that it needs to perform the system initialization required for entering the low power consumption mode; or store the target data in the first storage area if the electronic device is in the process of performing the system initialization required for entering the low power consumption mode.

In some embodiments, the target service request message includes a Bonjour service request message.

The present disclosure provides a control apparatus, including: a transmitting unit, configured to send target data to a target device in response to a target service request message when the electronic device is in a low power consumption mode, to allow the target device to establish a communication connection with the electronic device according to the target data; the target device is the device that sends the target service request message.

In some embodiments, the control apparatus includes a control unit, and when the electronic device is in a low power consumption mode, the control unit is at least partially in a working state.

In some embodiments, the control unit includes a first control unit. When the electronic device is in a low power consumption mode, the first control unit is in a working state. The first control unit is specifically configured to send target data to a target device in response to a target service request message when the electronic device is in a low power consumption mode, to allow the target device to establish a communication connection with the electronic device based on the target data; the target device is a device that sends the target service request message.

In some embodiments, the electronic device is configured to store the target data in a first storage area when it is in a non-low power consumption mode, and the first control unit is specifically configured to obtain the target data from the first storage area before sending the target data to the target device. The first storage area is a storage area that may be read by the first control unit when the electronic device is in a low power consumption mode.

In some embodiments, the electronic device is configured to store the target data in a first storage area when it is in a non-low power consumption mode, and the electronic device is specifically configured to store the target data, stored in the first storage area, in a second storage area before sending the target data to a target device. The first control unit is specifically configured to obtain the target data from the second storage area, where the second storage area is a storage area readable by the first control unit when the electronic device is in a low power consumption mode.

In some embodiments, the electronic device is configured to store the target data in a first storage area when it is in a non-low power consumption mode, and the first control unit is specifically configured to store the target data, stored in the first storage area, in a second storage area before sending the target data to the target device, and obtain the target data from the second storage area, where the second storage area is a storage area readable by the first control unit when the electronic device is in a low power consumption mode.

An embodiment of the present disclosure also provides an electronic device, including the control apparatus described in the above embodiments.

An embodiment of the present disclosure also provides an electronic device, including a memory for storing computer program instructions and a processor for executing the program instructions, where when the computer program instructions are executed by the processor, the electronic device executes the methods described in the above embodiments.

An embodiment of the present disclosure also provides an electronic device, where the computer-readable storage medium includes a stored program, where when the program is running, the device where the computer-readable storage medium is located is controlled to execute the communication methods described in the above embodiments.

Corresponding to the above embodiments, the present disclosure also provides an electronic device. FIG. 10 is a schematic structural diagram of another electronic device in accordance with an embodiment of the present disclosure. The electronic device 1200 may include: a processor 1201, a memory 1202, and a communication unit 1203. These components communicate through one or more buses. Those skilled in the art may understand that the structure of the electronic device shown in the figure does not constitute a limitation on the embodiments of the present disclosure. It may be a bus structure or a star structure, and may also include more or fewer components than those shown in the figure, or combine certain components, or arrange the components differently.

The communication unit 1203 is configured to establish a communication channel so that the electronic device may communicate with other devices, receive user data sent by other devices or send user data to other devices.

The processor 1201 is the control center of the electronic device. It uses various interfaces and lines to connect various parts of the entire electronic device. It runs or executes software programs, instructions, and/or modules stored in the memory 1202, and calls data stored in the memory to perform various functions of the electronic device and/or process data. The processor may be composed of an integrated circuit (IC), for example, it may be composed of a single packaged IC, or it may be composed of multiple packaged ICs with the same or different functions. For example, the processor 1201 may only include a central processing unit (CPU). In the embodiments of the present disclosure, the CPU may be a single computing core or multiple computing cores.

The memory 1202 is configured to store the execution instructions of the processor 1201. The memory 1202 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

When the execution instructions in the memory 1202 are executed by the processor 1201, the electronic device 1200 is enabled to execute part or all of the steps in the embodiments shown in FIGS. 2 to 6.

In some embodiments, the present disclosure further provides a computer storage medium, where the computer storage medium may store a program, and when the program is executed, the program may include some or all of the steps in each embodiment of the communication method provided by the present disclosure. The storage medium may be a magnetic disk, an optical disk, a ROM or a RAM, etc.

In some embodiments, the present disclosure further provides a computer program product, where the computer program product includes executable instructions, and when the executable instructions are executed on a computer, the computer executes part or all of the steps in each embodiment of the communication method provided by the present disclosure.

Those skilled in the art may clearly understand that the technology in the embodiments of the present disclosure may be implemented by means of software plus a necessary general hardware platform. Based on this understanding, the technical solutions in the embodiments of the present disclosure essentially, or the part that contributes to the existing technologies, may be embodied in the form of a software product, which may be stored in a storage medium such as ROM/RAM, a magnetic disk, an optical disk, etc., and includes a number of instructions for a computer device (which may be a personal computer, a server, or a network device, etc.) to execute the methods described in various embodiments of the present disclosure or certain parts of the embodiments.

In this specification, the same or similar parts between the various embodiments may be referred to each other. In particular, for the device embodiments and the terminal embodiments, since they are basically similar to the method embodiments, the description is relatively simple, and the relevant parts may be referred to the description in the method embodiments.

## Claims

1. A communication method, applied to an electronic device, the method comprising:
when the electronic device is in a low power consumption mode, in response to a target service request message, sending target data to a target device to allow the target device to establish a communication connection with the electronic device according to the target data, wherein the target device is a device that sends the target service request message.

2. The method according to claim 1, wherein the electronic device is configured to store the target data in a first storage area when in a non-low power consumption mode, and before sending the target data to the target device, the method further comprises:
acquiring the target data from the first storage area, wherein the first storage area is a storage area that is readable when the electronic device is in the low power consumption mode.

3. The method according to claim 1, wherein the electronic device is configured to store the target data in a first storage area when in a non-low power consumption mode, and before sending the target data to the target device, the method further comprises:
storing the target data, stored in the first storage area, in a second storage area, and acquiring the target data from the second storage area, wherein the second storage area is a storage area that is readable when the electronic device is in the low power consumption mode.

4. The method according to any one of claims 1 to 3, wherein sending the target data to the target device in response to the target service request message comprises:
obtaining a service request message;
determining whether the service request message is the target service request message; and
when the service request message is the target service request message, sending the target data to the target device in response to the target service request message.

5. The method according to claim 4, wherein the electronic device is configured to establish the communication connection with the target device through a target service, and sending the target data to the target device comprises:
encapsulating according to a data format of the target service to obtain target data in the target format; and
network-encapsulating the target data in the target format, and sending the network-encapsulated target data to the target device.

6. The method according to claim 2 or 3, further comprising:
before entering the low power consumption mode, storing the target data in the first storage area.

7. The method according to claim 6, wherein before entering the low power consumption mode, storing the target data in the first storage area comprises:
before entering the low power consumption mode,
storing the target data in the first storage area when network identification information of the electronic device changes; or
storing the target data in the first storage area when the electronic device is restarted; or
storing the target data in the first storage area when or after the electronic device determines that it needs to enter the low power consumption mode; or
storing the target data in the first storage area when the electronic device determines that it needs to perform system initialization required for entering the low power consumption mode; or
storing the target data in the first storage area when the electronic device is in a process of executing the system initialization required for entering the low power consumption mode.

8. A control apparatus, comprising:
a memory for storing computer program instructions and a processor for executing the program instructions, wherein when the computer program instructions are executed by the processor, the control apparatus is configured to:
send target data to a target device in response to a target service request message when an electronic device is in a low power consumption mode, to allow the target device to establish a communication connection with the electronic device according to the target data, wherein the target device is a device that sends the target service request message.

9. The control apparatus according to claim 8, wherein the control apparatus includes a control unit, and when the electronic device is in the low power consumption mode, the control unit is at least partially in a working state.

10. The control apparatus according to claim 9, wherein the control unit includes a first control unit, and when the electronic device is in the low power consumption mode, the first control unit is in the working state, and the first control unit is specifically configured to send the target data to the target device in response to the target service request message when the electronic device is in the low power consumption mode, to allow the target device to establish a communication connection with the electronic device based on the target data, wherein the target device is the device that sends the target service request message.

11. The control apparatusaccording to claim 10, wherein the electronic device is configured to store the target data in a first storage area when the electronic device is in a non-low power consumption mode, and the first control unit is specifically configured to obtain the target data from the first storage area before sending the target data to the target device, wherein the first storage area is a storage area that is readable by the first control unit when the electronic device is in the low power consumption mode.

12. The control apparatus according to claim 10, wherein the electronic device is configured to store the target data in a first storage area when it is in a non-low power consumption mode, and the electronic device is specifically configured to store the target data, stored in the first storage area, in a second storage area before sending the target data to the target device, and the first control unit is specifically configured to obtain the target data from the second storage area, wherein the second storage area is a storage area readable by the first control unit when the electronic device is in the low power consumption mode.

13. The control apparatus according to claim 10, wherein the electronic device is configured to store the target data in a first storage area when it is in a non-low power consumption mode, and the first control unit is specifically configured to store the target data, stored in the first storage area, in a second storage area before sending the target data to the target device, and obtain the target data from the second storage area, wherein the second storage area is a storage area readable by the first control unit when the electronic device is in the low power consumption mode.

14. An electronic device, comprising the control apparatus according to any one of claims 8 to 13.

15. A non-transitory computer-readable storage medium, comprising: a stored program, wherein when the stored program is executed, an electronic device where the computer-readable storage medium is located is controlled to execute the method according to any one of claims 1 to 7.
